# EUROPÄISCHE PATENTSCHRIFT

(11) **EP 3 243 035 B1**
(45) Veröffentlichungstag und Bekanntmachung des Hinweises auf die Patenterteilung: **07.06.2023**
(21) Anmeldenummer: 16717235.2
(22) Anmeldetag: 05.01.2016
(51) Int. Cl.: F28D 20/02

(54) **MISCHBEHÄLTER EINES LATENTWÄRMESPEICHERS UND VERFAHREN ZU DESSEN BETRIEB**
MIXING CONTAINER OF A LATENT HEAT STORAGE AND METHOD FOR THE OPERATION THEREOF
RÉCIPIENT DE MÉLANGE D'UN ACCUMULATEUR DE CHALEUR LATENTE ET PROCÉDÉ DE FONCTIONNEMENT

(30) Priorität: 08.01.2015 DE 102015000238
(43) Veröffentlichungstag der Anmeldung: 15.11.2017
(73) Patentinhaber: Optimize GmbH, 52068 Aachen (DE)
(72) Erfinder: KRANEIS, Wulf, 64380 Rossdorf (DE)
(74) Vertreter: FARAGO Patentanwälte GmbH
(86) Internationale Anmeldenummer: PCT/DE2016/000003
(87) Internationale Veröffentlichungsnummer: WO 2016/110288

(56) Entgegenhaltungen:
- DE-A1-102013 208 974
- US-A- 4 111 260
- US-A1- 2012 168 126

## Beschreibung

Die Erfindung betrifft ein Verfahren zum Betrieb eines Mischbehälters mit angeschlossenem Eisspeicher eines Latentwärmespeichers, wobei ein Speicherfluid zwischen einer flüssigen und einer festen Phase wechselt und in der flüssigen Phase mit einem Wärmeträgerfluid vermischt wird, wobei Schmelzwärme zwischen dem Speicherfluid und dem Wärmeträgerfluid übertragen wird, wobei das flüssige Speicherfluid in dem Wärmeträgerfluid unlöslich ist, und wobei das flüssige Speicherfluid eine höhere Dichte als das Wärmeträgerfluid aufweist und wobei nach der Wärmeübertragung von Wärmespeicherfluid auf Wärmeträgerfluid das Wärmeträgerfluid und Wärmespeicherfluid wieder getrennt werden.

Latentwärmespeicher mit oder ohne Mischbehälter sind Gegenstand zahlreicher Patente oder Patentanmeldungen, z.B. DE 43 14 509 A1 oder DE 2607168 C3 oder auch US 4 111 260A, DE 10 2013 208974A1 und US 2012/168126 A1. Bei Verfahren dieser Art liegt der wesentliche Schritt darin, dass während des Energieentzuges aus dem Speicher das festwerdende, bzw. festgewordene Speicherfluid vom flüssigen Speicherfluid und insbesondere beide vom Wärmeträgerfluid sicher und vollständig getrennt werden, da das Wärmeträgerfluid ständig einer Kühlung auf Temperaturen unterliegt, die unter der Erstarrungstemperatur des Speicherfluids liegen und daher der externe Wärmetauscher zur Kühlung des Wärmeträgerfluids mit festem Speicherfluid verstopft, wenn das Speicherfluid nicht vollständig aus dem Wärmeträgerfluid entfernt wird. Die sichere Trennung von festem und flüssigem Wärmespeicherfluid ist insofern bedeutend, dass flüssiges Wärmespeicherfluid ständig benötigt wird, um im Kontakt mit dem Wärmeträgerfluid gebracht zu werden und festes Wärmespeicherfluid diesen Prozess nur stört, wenn es überflüssigerweise bewegt wird und es sich außerdem mit dem Wärmeträgerfluid wieder mischt. Zudem ist in der Regel das Wärmeträgerfluid, in diesem Falle ist es vorzugsweise Kerosin oder Oktan, deutlich teurer als das Wärmespeicherfluid, in diesem Falle vorzugsweise Wasser, so dass die Menge des Wärmeträgerfluids so klein wie möglich im Prozess gehalten werden sollte und damit vor allem Zonen, in denen Wärmeträgerfluid und Wärmespeicherfluid in Mischung vorliegen, möglichst klein gehalten werden sollten. In der DE 43 14 509 A1 wird wiederholt darauf hingewiesen, dass die vorstehend beschriebene Problematik der Trennung essentiell für Verfahren und Vorrichtung ist. In der DE 2607168 C3 wurde erkannt, dass letztlich die Trennung von Wärmeträger- und Wärmespeicherfluid der entscheidende Punkt aller Verfahren zu diesem Thema ist. Wenn nicht diese Trennung mit einfachem Aufwand zu realisieren ist, sind diese Verfahren praktisch nicht anwendbar, weswegen wahrscheinlich auch keines der patentierten Verfahren in größerem Maßstab angewendet wurde. In der DE 43 14 509 A1 wird außerdem beschrieben, wie mittels eines Coalescers eine Trennung von Wärmeträger- und Wärmespeicherfluid durchgeführt werden kann.

In US-A-4111260, US-A-2012168126 und DE-A-102013208974 werden weitere Vorrichtungen zum Vermischen und Entmischen zweier Flüssigkeiten unterschiedlicher Dichte offenbart.

Die hier vorgestellte Erfindung vermeidet einen Coalescer und löst das Problem durch ein neuartiges Verfahren über die Geometrie des Mischbehälters verbunden mit einer neuartigen Strömungsführung von Wärmeträger- und Wärmespeicherfluid durch eben diesen Mischbehälter während des Energieübergangs.

### Aufgabe

Dieser Erfindung liegt die Aufgabe zugrunde, die Ver- und Entmischung eines Wärmespeicher- und Wärmeträgerfluids in einem Mischbehälter eines Latentwärmespeicher so zu gestalten, dass nach Vermischen von flüssigem Wärmeträgerfluid und flüssigem Wärmespeicherfluid eine vollständige Trennung von Wärmeträgerfluid und flüssigem Wärmespeicherfluid und festem Wärmespeicherfluid erfolgt, so dass das feste Wärmespeicherfluid auf einfache Art und Weise gespeichert werden kann und das flüssige Wärmespeicherfluid dem Kreisprozess immer wieder zur Verfügung steht und das flüssige Wärmeträgerfluid ohne oder nahezu ohne Beimengungen von festem Wärmespeicherfluid im Kreis geführt wird.

### Lösung

Die vorliegende Erfindung löst die gestellte Aufgabe durch ein Verfahren gemäß Anspruch 1 und eine Vorrichtung gemäß Anspruch 10. Weitere Ausführungsformen sind Gegenstand der weiteren abhängigen Ansprüche.

Ausgehend von den bekannten Verfahren wird nach der Erfindung vorgeschlagen, dass das Wärmeträgerfluid zum Vermischen aus einem Kreislauf entnommen und nach Aufnahme der Erstarrungswärme zurück in den Kreislauf geführt wird. Das Wärmeträgerfluid ist dabei ständig flüssig und wird ständig, z.B. von einer Wärmepumpe, die ständig Nutzwärme auf der warmen Seite des Wärmepumpenprozesses abgibt, gekühlt.

Das Speicherfluid wird zum Vermischen mit dem Wärmeträgerfluid in eine Vielzahl von Tropfen verteilt. Durch das Einbringen in Form von Tropfen wird die Oberfläche des Wärmespeicherfluids im Verhältnis zu seinem Volumen erhöht, so dass die Größe der wärmeaustauschenden Oberflächen mit der Abnahme des mittleren Tropfendurchmessers entsprechend ansteigen.

Das Speicherfluid wird in einen Mischbehälter eingebracht, der im oberen Teil mit dem Wärmeträgerfluid gefüllt ist, bzw. von diesem auch ständig durchflossen wird und im unteren Teil mit flüssigem Wärmespeicherfluid gefüllt ist, bzw. ständig durchflossen wird, wobei zwischen Austritt des Wärmespeicherfluids in den Mischbehälter und der Oberfläche des Wärmeträgerfluids vorzugsweise noch eine dünne Gasschicht, z.B. Luft, in einer Glocke gefangen ist, damit das austretende Wärmespeicherfluid durch den Kontakt mit dem kälteren Wärmeträgerfluid nicht am Austritt der Tropfvorrichtung gefrieren kann. Während im oberen Teil des Mischbehälters eine möglichst gute und gleichmäßige Vermischung von flüssigem Wärmeträgerfluid und flüssigem Wärmespeicherfluid erfolgt, um den Wärmetausch zwischen beiden Fluiden und damit die Erzeugung von festem Wärmespeicherfluid zu erreichen, wird über die Geometrie des Mischbehälters und damit über die Strömungsführung durch diesen im unteren Teil des Mischbehälters eine Trennung zwischen Wärmeträgerfluid und dem flüssigen, bzw. festen Wärmespeicherfluid erreicht. Aufgrund der Tatsache, dass das Wärmespeicherfluid sowohl in festem als auch in flüssigem Zustand aufgrund der höheren Dichte im Wärmeträgerfluid absinkt, tritt dann ständig flüssiges und festes Wärmespeicherfluid an einer Grenzschicht zwischen Wärmeträger und Wärmespeicherfluid im Mischbehälter aus, welches erfindungsgemäß an der Stelle des Ausströmens sofort von der Grenzschicht weggeführt wird und dann im weiteren Verlauf des Weiterströmens voneinander in festes und flüssiges Wärmespeicherfluid separiert wird, so dass festes Wärmespeicherfluid in einem Eisspeicher gespeichert wird während das flüssige Wärmespeicherfluid dem Prozess wieder zur Verfügung steht.

An der Grenzschicht bilden sich bei Verfahren dieser Art oft Mischungen von Wärmeträgerfluid und festem und flüssigem Wärmespeicherfluid, die dann entweder nicht mehr sauber voneinander zu trennen sind und damit den angestrebten Prozess zum Erliegen kommen lassen oder die feste Wärmespeicherfluidphase blockiert den Prozess innerhalb des Mischbehälters, weil die feste Phase sich innerhalb des Mischbehälters anlagert und immer weiter aufbaut. Auch ist oft nicht zu vermeiden, dass aufgrund der schlechten und vor allem langsamen Trennung nahe der Grenzschicht erhebliche Mengen von Wärmeträgerfluid gebunden sind, die dem eigentlichen Prozess, dem Wärmetausch im Mischbehälter, nicht zur Verfügung stehen. Die hier vorgestellte Erfindung vermeidet genau das.

### Ausführungsbeispiel

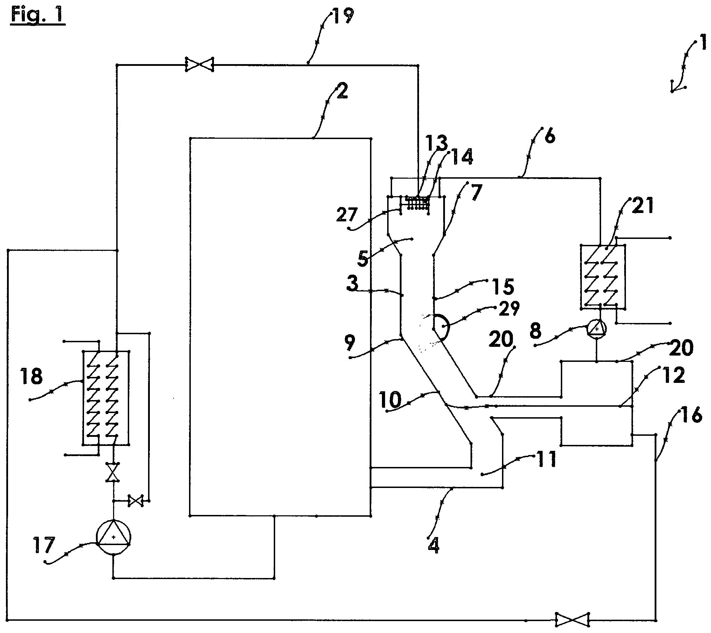

Figur 1 zeigt einen erfindungsgemäßen Latentwärmespeicher 1 mit einem Eisspeicher 2. Der Eisspeicher 2 ist zum Beispiel ein handelsüblicher Wasserspeicher zur Montage z.B. im Erdreich, wenn erwünscht ist, dass Umweltwärme vom Speicher aufgenommen wird, oder z.B. zur Montage oberhalb des Erdreiches und gut isoliert, wenn die gespeicherte Kälte später Kühlprozessen zur Verfügung gestellt werden soll. An den Eisspeicher 2 ist ein Mischbehälter 3 über eine leicht abfallende oder horizontal verlaufende oder leicht ansteigende Rohrleitung 4 angeschlossen. Der Mischbehälter 3 ist in einem oberen Teil des Mischbehälters 7 mit einem Wärmeträgerfluid 5 gefüllt und durchflossen, welches ständig über eine Rohrleitung 6 in den oberen Teil des Mischbehälters 7 nachströmt und aus dem Mischbehälter 3 über eine Pumpe 8 wieder abgezogen wird (alternativ kann die Strömungsrichtung durch Drehen der Pumpe 8 auch umgedreht werden, d.h. das Wärmeträgerfluid 5 wird von der Pumpe 8 in den Mischbehälter 3 eingebracht und durch die Rohrleitung 6 aus diesem entnommen). Dabei wird das Wärmeträgerfluid 5 ständig in einem Wärmetauscher 21 gekühlt. Der Mischbehälter 3 ist erfindungsgemäß so ausgebildet, dass er im Anschluss an den oberen Teil des Mischbehälters 7 ein senkrechtes oder nahezu senkrechtes Rohr 15 aufweist, welches nach einem Knick 9, in eine genügend lange Schräge 10, übergeht. Anstelle des Knicks 9 kann die Änderung der Strömungsrichtung, die mit diesem Knick 9 erreicht wird, auch durch einen oder mehrere Teilbögen realisiert werden, was sich positiv auf die Reibungsverluste der Strömung auswirkt. Der Winkel 29 der Strömungsänderung zwischen dem Austritt der Strömung aus dem oberen Teil des Mischbehälters 7 und der Strömungsrichtung des Wärmespeicherfluid 11 nahe der Grenzschicht 12 beträgt zwischen 92 Grad und 178 Grad. Ein flüssiges Wärmespeicherfluid 11 wird durch eine Rohrleitung 19 über eine Tropfvorrichtung 13 in den oberen Teil des Mischbehälters 7 eingebracht, dabei ist der obere Teil des Mischbehälters 7 an der Tropfvorrichtung 13 so ausgebildet, dass die Tropfvorrichtung 13 sich in einem Gaspolster 14 unter der Glocke 27 befindet, so dass das flüssige Wärmespeicherfluid 11 nicht mit dem kalten Wärmeträgerfluid 5 in direkten Kontakt kommt, so dass die Tropfvorrichtung 13 nicht einfrieren kann.

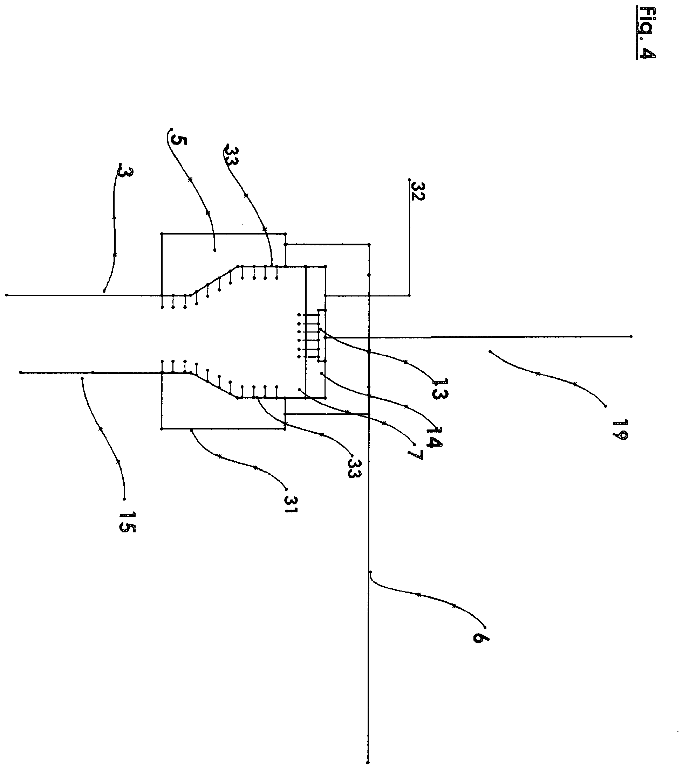

Alternativ zur vorstehend beschriebenen Einbringung von Wärmeträgerfluid 5 und Wärmespeicherfluid 11 in den oberen Teil des Mischbehälters 7 kann diese Einbringung auch wie in Fig. 4 gezeigt so gestaltet werden. Über eine Rohrleitung 19 wird genauso wie zuvor Wärmespeicherfluid 11 zu einer Tropfvorrichtung 13 eingebracht, die in einem Gasraum 14 sitzt, der über eine Befüll- und Entleerleitung 32 erzeugt und in seiner Größe eingestellt werden kann. Der obere Teil des Mischbehälters 7 wird dabei mit einem zusätzlichen Behälter 31 umgeben, der den oberen Teil des Mischbehälters 7 dicht umfasst, so dass über die Rohrleitung 6 Wärmeträgerfluid 5 zuerst in den Behälter 31 und von dort über die durchlässige Wand 33 in den oberen Teil des Mischbehälters 7 eingebracht wird. Diese Wand kann z.B. aus Kunststoff oder Metall bestehen und sehr stark perforiert sein, genauso kann die Wand aus Drahtgeweben oder anderen flüssigkeitsdurchlässigen Materialien gebaut sein, die einen gleichmäßigen Durchtritt von Wärmeträgerfluid 5 ermöglichen. Dieser Aufbau verhindert den Ansatz von Eis im oberen Teil des Mischbehälters 7, da das sich bildende Eis unterhalb der Tropfvorrichtung 13 durch das von außen in den oberen Teil des Mischbehälters 7 ausströmende Wärmeträgerfluid 5 von der Wand 33 entfernt gehalten wird.

Das Wärmespeicherfluid 11 strömt innerhalb des ebenfalls nach unten strömenden Wärmeträgerfluids 5 durch den Mischbehälter 3 nach unten und wird aufgrund der Geometrie des Mischbehälters 3 und seiner höheren Dichte dazu gezwungen, sich auf der Schräge 10 zu konzentrieren und über die Schräge 10 zur Grenzschicht 12 zu fließen, was dazu führt, dass flüssiges und festes Wärmespeicherfluid 11 dann am Boden der Schräge 10 auf Höhe der Grenzschicht 12 austreten, das heißt nahe des Schnittpunktes der Grenzschicht 12 mit der Schräge 10. Der Mischbehälter 3 kann dabei mit rundem Querschnitt oder anstelle des runden Querschnitts auch mit einem rechteckigem Querschnitt ausgeführt sein, bzw. andere Querschnitte annehmen, die eine Konzentrierung des Wärmespeicherfluids 11 am Boden der Schräge 10 bewirken. Wesentlich ist, dass die Verlängerung der rechten Seite des Rohres 15 noch auf die Schräge 10 vor Erreichen der Grenzschicht 12 trifft.

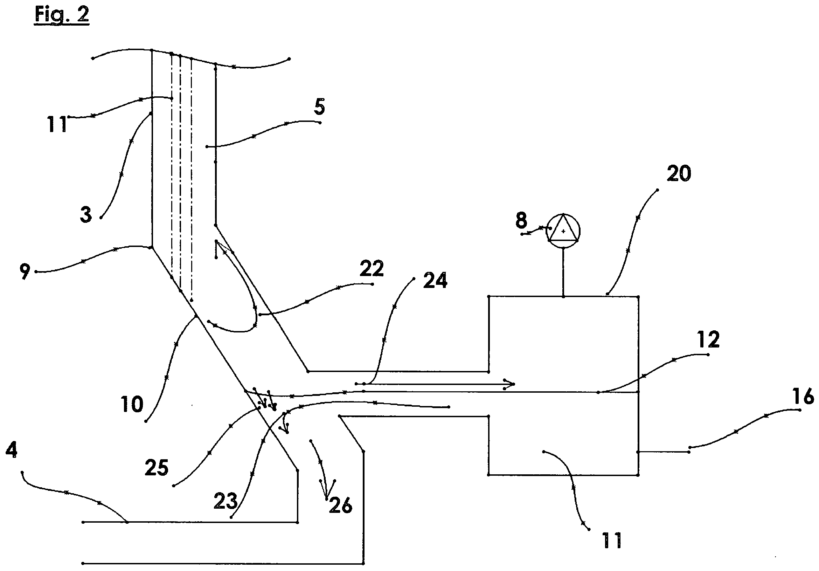

Die Lage der Grenzschicht 12 wird innerhalb des Mischbehälters 3 in einem unteren horizontalen Teil des Mischbehälters 20, der vorzugsweise mit rundem Querschnitt (Rohr) ausgebildet wird, aber auch andere Querschnittsformen, z.B. rechteckig, annehmen kann, so eingestellt, dass genügend Wärmespeicherfluid 11 von rechts nach links hindurchströmen kann, um genügend Strömung des Wärmespeicherfluids 23 (siehe Fig. 2) zu induzieren und um die gegebenenfalls noch vorhandenen festen Komponenten des Wärmespeicherfluids 11 im Bereich der Grenzschicht 12, deren unterer Teil sich in der Strömung des Wärmespeicherfluids 23 befindet, derer oberer Teil aber auch ein wenig in die horizontale Strömung 24 des Wärmeträgerfluids 5 ragt, nach links in Richtung Austritt 25 (Fig. 2) zu befördern, von wo sie dann weiter in Richtung Eisspeicher 2 strömen. Im unteren horizontalen Teil des Mischbehälter 20 wird von rechts über eine Rohrleitung 16 ständig flüssiges Wärmespeicherfluid 5 zugeführt, so dass das aus der Grenzschicht 12 austretende Wärmespeicherfluid 5 (fest und flüssig) dadurch gezwungen wird, in den unteren Teil des Mischbehälters 3 und von dort aus weiter durch die Rohrleitung 4 in den Eisspeicher 2 zu strömen (siehe Figur 2). Die Strömungsgeschwindigkeit in der horizontalen Strömung des Wärmeträgerfluid 24 im unteren horizontalen Teil des Mischbehälters 20 wird so eingestellt, dass kein Wärmespeicherfluid 11 durch Turbulenzen in Richtung der Pumpe 8 wandern kann. Die Rohrleitung 4 verläuft in Fig. 1 kurz senkrecht nach unten und dann in einem Winkel von 90 Grad oder etwas mehr als 90 Grad gegen die Senkrechte nach links, die Rohrleitung 4 kann auch unter einem Winkel von ca. 0-30 Grad gegen die Senkrechte ein Stück nach unten verlaufen und danach erst in die Waagerechte oder nahezu in die Waagerechte drehen. Der Zweck von Rohrleitung 4 in dem an den Mischbehälter 3 anschließenden Stück besteht darin, ggf. noch mitgerissenes Wärmeträgerfluid 5 im Bereich des Austritts 25 wieder nach oben aufsteigen zu lassen, aber festes und flüssiges Wärmespeicherfluid 11 nach unten wie zuvor beschrieben abzuziehen, wobei der nahezu horizontale Teil der Rohrleitung 4 bevorzugt leicht in Strömungsrichtung geneigt ist, um um noch eine zusätzliche Sicherheit gegen etwas Mitriss von Wärmeträgerfluid 5 in den Eisspeicher 2 zu erreichen, der sich über diese Verbindung der Rohrleitung 4 zwischen Eisspeicher 2 und Mischbehälter 3 in räumlicher Unabhängigkeit zu Mischbehälter 3 befindet, das heißt, dass Eisspeicher 2 und Mischbehälter 3 beliebig voneinander entfernt sein können. Nach Einströmung des festen und flüssigen Wärmespeicherfluids 11 in den Eisspeicher 2 separiert sich das feste Wärmespeicherfluid 5 vom flüssigen Wärmespeicherfluid 5 im unteren Teil des Eisspeichers 2 durch den Dichteunterschied, wobei das feste Wärmespeicherfluid 11 aufgrund der geringen Dichte nach oben strömt und den Speicher füllt, während das flüssige Wärmespeicherfluid 11 unten im Eisspeicher 2 abgezogen wird und über eine Pumpe 17 (Fig. 1) und gegebenenfalls über einen Wärmetauscher 18 (zum Wärmen oder Kühlen des Wärmespeicherfluids 10) wieder im Kreislauf über eine Rohrleitung 19 zur Tropfvorrichtung 13 und über die Rohrleitung 16 zum unteren horizontalen Teil des Mischbehälter 20 geführt wird. Im Eisspeicher 2 befindet sich ein Eis/Wasser Gemisch, in entladenem Zustand ist der Eisanteil sehr hoch während in beladenem Zustand nur Wasser enthalten ist. Beladen kennzeichnet hier den energetisch höheren Zustand als entladen.

Aufgrund des Knicks 9, d.h. einer Richtungsänderung im Mischbehälter 3 bildet sich eine Rezirkulation 22 von Wärmeträger- und Wärmespeicherfluid im Rohr im Bereich der Schräge 10 aus wie in Figur 2 dargestellt. Aufgrund dieser Rezirkulation 22 ergibt sich für das Wärmespeicherfluid 11 im unteren Teil des Mischbehälters 3 eine längere Verweildauer in diesem, so dass ein länger währender Wärmetausch erfolgt.

Ferner sind in Fig. 2 die Strömungsverhältnisse im Mischbehälter 3 vereinfacht noch einmal dargestellt, es ist hier der mittlere Teil des Mischbehälter 3, der untere horizontale Teil des Mischbehälters 20 und der Übergang zur Rohrleitung 4 gezeigt. Flüssiges Wärmespeicherfluid 11 kommt in Tropfen aus dem oberen Teil des Mischbehälters 7. Die Tropfen fallen dann durch das (strömende) Wärmeträgerfluid 5 nach unten und treffen auf die Schräge 10 oder geraten je nach Ausbildung des Knicks 9, bzw. der Geometrie des Mischbehälters 3 in die Rezirkulation 22, aus der sie letztlich auch mit den anderen Tropfen nach Wärmeabgabe auf die Schräge 10 auftreffen, um dann die Grenzschicht 12 im Bereich eines Austritts 25 in festem und flüssigen Zustand zu durchstoßen. Das Durchstoßen der Grenzschicht und damit die Trennung von Wärmespeicherfluid 11 und Wärmeträgerfluid 5 funktioniert aufgrund der vertikalen Geschwindigkeitskomponente, welche die Strömung des Wärmespeicherfluid 11 über die Schräge 10 entwickelt sowie aufgrund der höheren Dichte des Speicherfluids 11, die das Wärmespeicherfluid 11 innerhalb des Wärmeträgerfluids 5 nach unten befördert. Die Trennung vom Wärmeträgerfluid 5 wird außerdem dadurch unterstützt, dass das strömende Wärmeträgerfluid 5 kurz oberhalb der Grenzschicht 12 zur Seite ausweichen muss, da es aufgrund seiner Dichte oberhalb der Grenzschicht 12 bleiben muss, und sich daher im Bereich des Austritts 25 vom Wärmespeicherfluid 11 seitwärts entfernt.

Aufgrund einer in der Strömungsgeschwindigkeit mittels der Lage der Grenzschicht einstellbaren horizontalen Strömung 23 des flüssigen Wärmespeicherfluids 11 nach links, welches über die Rohrleitung 16 in den unteren horizontalen Teil des Mischbehälters 20 eingebracht wird, wird im Bereich des Austritts 25 eine Strömung von Wärmespeicherfluid 11 in der Strömungsrichtung von Wärmespeicherfluid 26 induziert, die dafür sorgt, dass das feste und flüssige Wärmespeicherfluid 11 von der Grenzschicht 12 in Richtung der Rohrleitung 4 entfernt wird, bzw. durch die (in ihrer Geschwindigkeit einstellbare) Strömung 23 wird ständig dafür gesorgt, dass feste Bestandteile des Wärmespeicherfluids 11 nicht nach rechts mit einer Strömung 24 des Wärmeträgerfluids 5 in Richtung der Absaugung des Wärmeträgerfluids 5 aus dem unteren horizontalen Teil des Mischbehälters 20 und damit zur Pumpe 8 fließen können, weil diese Strömung sie ständig nach links in Richtung des Austritts 25 drückt und damit letztlich in Richtung der Strömungsrichtung von Wärmespeicherflüssigkeit 26 in Richtung der Rohrleitung 4 und damit zum Eisspeicher 2. Deutlichkeitshalber sei erwähnt, dass festes Wärmespeicherfluid 11, welches sich in der Grenzschicht 12 befinden kann, sich mit einem kleineren Volumenteil in der horizontalen Strömung des Wärmeträgerfluids 24 befindet und zu einem größeren Volumenteil in der darunter befindlichen Strömung des Wärmespeicherfluids 23, so dass eine genügend starke Strömung des Wärmespeicherfluids 23 dafür sorgt, dass festes Wärmespeicherfluid 11 in Richtung des Austritt 25 befördert wird, damit es den Mischbehälter 3 verlässt.

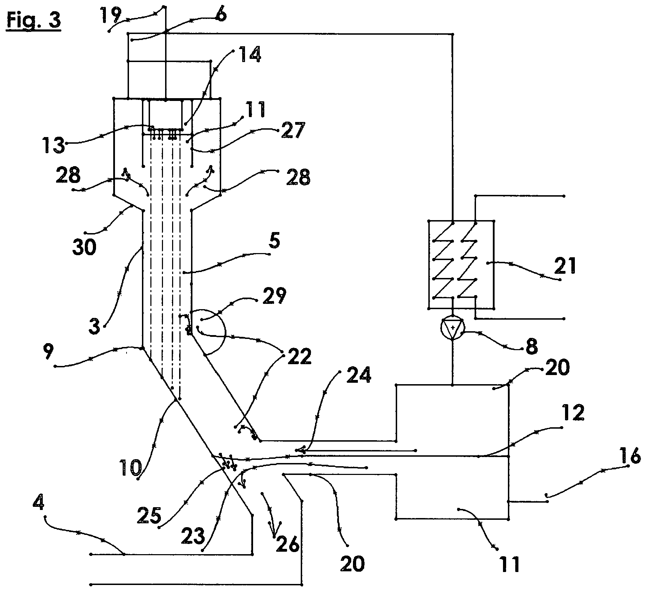

Durch den Mischbehälter 3 kann das Wärmeträgerfluid 5 und das Wärmespeicherfluid 11 aber auch im Gegenstrom geführt werden, wobei das Wärmespeicherfluid 11 seine vorstehend beschriebene Strömungsrichtung von oben nach unten durch den Mischbehälter 3 beibehält. Dieser Prozess ist nachstehend in Fig. 3 beschrieben.

Über einen Gegenstrom im mittleren und oberen Teil des Mischbehälters 3 wird der Wärmetausch zwischen Wärmespeicherfluid 11 und Wärmträgerfluid 5 verbessert und es lässt sich insbesondere über die Strömungsgeschwindigkeit des Wärmeträgerfluids 5 im Mischbehälter 3 und der Tropfengröße der über die Tropfvorrichtung 13 eingetropften Tropfen die mittlere Verweildauer des Wärmespeicherfluid 11 im Mischbehälter 3 beeinflussen. Über die Pumpe 8 wird Wärmeträgerfluid 5 und über die Rohrleitung 16 wird Wärmespeicherfluid 11 im unteren horizontalen Teil des Mischbehälters 20 eingebracht, sie strömen im Gleichstrom nach links hin in Richtung Schräge 10 (die horizontale Strömung des Wärmeträgerfluids 24 strömt in diesem Fall entgegen dem in Fig. 1 und Fig. 2 beschriebenen Fall), wobei das Wärmeträgerfluid 5 anschließend nach schräg oben durch den Mischbehälter 3 strömt, während die Strömung des Wärmespeicherfluid 23 sich mit dem Wärmespeicherfluid 11, welches von oben über die Schräge 10 nach unten durch die Grenzschicht 12 strömt, vereinigt und nach unten wie durch die Strömungsrichtung 26 angezeigt aus dem Mischbehälter 3 austritt und in Richtung der Rohrleitung 4 und durch diese weiter in Richtung Eisspeicher 2 strömt.

Die Geschwindigkeit des Wärmeträgerfluid 5 ist dabei so einzustellen, dass die die Tropfvorrichtung 13 verlassenden Tropfen des Wärmespeicherfluid 11 innerhalb des Mischbehälters 3 sich innerhalb der sich nach oben bewegenden Strömung des Wärmeträgerfluid 5 noch nach unten bewegen können und die Schräge 10 erreichen, oder anders formuliert, diese Tropfen müssen so groß sein, dass sie innerhalb des Mischbehälters 3 bei einer gegebenen Strömungsgeschwindigkeit des Wärmeträgerfluid 5 noch nach unten gelangen, es muss also die Fallgeschwindigkeit der Tropfen des Wärmespeicherfluid 11 innerhalb des Wärmeträgerfluid 5 größer sein als die dieser Fallgeschwindigkeit entgegenstehende Strömungsgeschwindigkeit des Wärmeträgerfluid 5. Dies kann natürlich auch über die Geometrie des Mischbehälters 3 beeinflusst werden, z.B. dass man den oberen Teil des Mischbehälters 7 etwas aus der Senkrechten heraus nach links entgegen des Uhrzeigersinns in der gezeigten Ansicht dreht. Die Rezirkulation 22 in der Fig. 3, die sich bildet, erhöht Vermischung und Wärmeübergang im Mischbehälter 3. Im oberen Teil des Mischbehälters 3 strömt das Wärmeträgerfluid 5 nach seitlich oben wie über eine Strömungsrichtung des Wärmeträgerfluids 28 angezeigt bis zur Spitze des Mischbehälters 3, wo es den Mischbehälter 3 verlässt. Dabei ist sicherzustellen, dass über die Querschnittsgestaltung des Mischbehälter 3 im oberen Teil des Mischbehälters 7 auf Höhe der Glocke 27 die Strömungsgeschwindigkeiten des Wärmeträgerfluid 5 so gering sind, dass flüssiges Wärmespeicherfluid 5 nicht den Mischbehälter 3 über die Rohrleitung 6 verlassen kann, sondern z.B. konzentriert über die Schräge 30 den oberen Teil des Mischbehälters 7 nach unten verlässt.

In den Figuren sind:
- 1: Latentwärmespeicher
- 2: Eisspeicher
- 3: Mischbehälter
- 4: Rohrleitung
- 5: Wärmeträgerfluid
- 6: Rohrleitung
- 7: Oberer Teil des Mischbehälters
- 8: Pumpe
- 9: Knick
- 10: Schräge
- 11: Wärmespeicherfluid
- 12: Grenzschicht
- 13: Tropfvorrichtung
- 14: Gasraum
- 15: Rohr
- 16: Rohrleitung
- 17: Pumpe
- 18: Wärmetauscher
- 19: Rohrleitung
- 20: Unterer horizontaler Teil des Mischbehälters
- 21: Wärmetauscher
- 22: Rezirkulation
- 23: Strömung des Wärmespeicherfluids
- 24: Horizontale Strömung des Wärmeträgerfluids
- 25: Austritt
- 26: Strömungsrichtung von Wärmespeicherfluid
- 27: Glocke
- 28: Strömungsrichtung des Wärmeträgerfluid
- 29: Winkel
- 30: Schräge
- 31: Behälter
- 32: Befüll- und Entleerleitung
- 33: Wand des oberen Teil des Mischbehälters

## Patentansprüche

1. Verfahren zum Betrieb eines Mischbehälters (3) mit einem angeschlossenen Eisspeicher (2) eines Latentwärmespeichers (1), wobei ein Wärmespeicherfluid (11) zwischen einer flüssigen und einer festen Phase wechselt und in der flüssigen Phase mit einem Wärmeträgerfluid (5) vermischt wird, wobei Schmelzwärme zwischen dem Wärmespeicherfluid (11) und dem Wärmeträgerfluid (5) übertragen wird, wobei das flüssige Wärmespeicherfluid (11) in dem Wärmeträgerfluid (5) unlöslich ist, und wobei das flüssige Wärmespeicherfluid (11) eine höhere Dichte als das Wärmeträgerfluid (5) aufweist, **dadurch gekennzeichnet, dass**
a) das Wärmespeicherfluid (11) in einem oberen Teil des Mischbehälters (7) durch einen Gasraum (14) in das Wärmeträgerfluid (5) eingebracht wird,
b) durch eine Strömung des Wärmespeicherfluids (11) innerhalb einer Strömung des Wärmeträgerfluids (5) Wärme von Wärmespeicherfluid (11) auf Wärmeträgerfluid (5) übertragen wird,
c) über eine Strömungsumlenkung das Wärmespeicherfluid (11) in flüssiger und fester Form konzentriert wird,
d) das konzentrierte Wärmespeicherfluid (11) eine Grenzschicht (12) zwischen Wärmeträgerfluid (5) und Wärmespeicherfluid (11) durchströmt,
e) das Wärmespeicherfluid (11) mit einer zweiten Strömung des Wärmespeicherfluids (23) unter der Grenzschicht (12) in Richtung eines Eisspeicher (2) abgezogen wird,
f) im Eisspeicher (2) über eine langsame horizontale Einströmung des Wärmespeicherfluids (11) in den unteren Teil des Eisspeichers (2) eine Trennung zwischen fester und flüssiger Phase des Wärmespeicherfluids (11) durch Dichteunterschied erzeugt wird.

2. Verfahren nach Anspruch 1, **dadurch gekennzeichnet, dass** das Wärmespeicherfluid (11) im oberen Teil eines Mischbehälters (7) durch den Gasraum (14) innerhalb einer Glocke (27) tropfenförmig durch eine Tropfvorrichtung (13) in das um die Glocke (27) strömende Wärmeträgerfluid (5) einzubringen, wobei der Gasraum (14) in seiner Größe einstellbar innerhalb der Glocke (27) ist.

3. Verfahren nach Anspruch 1, **dadurch gekennzeichnet, dass** das Wärmespeicherfluid (11) im oberen Teil eines Mischbehälters (7) durch den Gasraum (14) tropfenförmig durch eine Tropfvorrichtung (13) in das Wärmeträgerfluid (5) einzubringen, welches durch eine Rohrleitung (6) zuerst in einen Behälter (31), der den oberen Teil des Mischbehälters (7) dicht umgibt, strömt, um dann anschließend durch die flüssigkeitsdurchlässige Behälterwand (33) in den oberen Teil des Mischbehälters (7) zu strömen, wobei der Gasraum (14) über eine Befüll- und Entleerleitung (32) verfügt, über die die Größe des Gasraums (14) innerhalb des oberen Teil des Mischbehälters (7) in seiner Größe einstellbar ist.

4. Verfahren nach Anspruch 1, **dadurch gekennzeichnet, dass** das Wärmespeicherfluid (11) in einer senkrechten oder nahezu senkrechten Strömung durch den oberen Teil des Mischbehälters (7) und ein Rohr (15) nach unten durch das ebenfalls nach unten strömende Wärmeträgerfluid (5) mit diesem zu vermischen, um dadurch Wärme vom Wärmespeicherfluid (11) auf das Wärmeträgerfluid (5) zu übertragen, wodurch das Wärmespeicherfluid (11) teilweise in den festen Aggregatzustand übergeht.

5. Verfahren nach Anspruch 1, **dadurch gekennzeichnet, dass** im unteren Teil des Mischbehälters (3) über eine Strömungsumlenkung im Knick (9) das Wärmespeicherfluid (11) in flüssiger und fester Form über eine Schräge (10), die in einem Winkel (29) von 92-178 Grad zur Senkrechten verläuft, aufgrund seiner höheren Dichte zum Wärmeträgerfluid (5) und aufgrund der Durchströmung dieser Schräge (10) des Mischbehälters (3) am Boden der Schräge (10) nach unten strömend aufzukonzentrieren, dabei kann die abrupte Strömungsumlenkung im Knick (9) auch strömungsgünstiger durch eine oder mehrere nacheinander erfolgende weichere Umlenkungen erfolgen, so dass am Ende der Strömungsumlenkung Wärmeträgerfluid (5) und Wärmespeicherfluid (11) mit einem Winkel von 92-178 Grad zur Senkrechten strömen.

6. Verfahren nach Anspruch 1 und Anspruch 4, **dadurch gekennzeichnet, dass** das in Teilen flüssige und in Teilen feste Wärmespeicherfluid (11)-bei Erreichen der Grenzschicht (12) durch die Grenzschicht (12) in eine unter der Grenzschicht erzeugte Strömung des Wärmespeicherfluid (23) einzuleiten, so dass das die Grenzschicht (12) durchstoßende Wärmespeicherfluid (11) im Bereich des Austritts 25 mittels der Strömung des Wärmespeicherfluid (23) den Mischbehälter (3) in Richtung Eisspeicher (2) abgezogen wird, während mitgerissene Teile des Wärmeträgerfluids (5) wieder nach oben zur Grenzschicht (12) aufgrund der geringeren Dichte gegenüber dem Wärmespeicherfluid (11) aufsteigen und mit einer horizontalen Strömung des Wärmeträgerfluid (24) den unteren horizontalen Teil des Mischbehälters (20) verlassen, wobei vorzugsweise die Strömung des Wärmeträgerfluids (23) dadurch erzeugt wird, dass über eine Rohrleitung (16) ständig Wärmespeicherfluid (11) in den unteren horizontalen Teil des Mischbehälters (20) gefördert wird, hinzu kommt, dass die Trennung von Wärmeträgerfluid (5) und Wärmespeicherfluid (11) dadurch unterstützt wird, dass das Wärmeträgerfluid (5), von oben kommend, kurz oberhalb der Grenzschicht (12) aufgrund seiner geringeren Dichte nach rechts seitlich wegströmt, weil es nicht durch die Grenzschicht (12) strömen kann, und somit vom Trennbereich im Bereich des Austritts (25) seitlich wegströmt.

7. Verfahren nach Anspruch 1, **dadurch gekennzeichnet, dass** im Eisspeicher (2) über eine langsames horizontales oder nahezu horizontales Einströmen des Wärmespeicherfluids (11) in fester und flüssiger Phase in geringer Höhe über dem Boden des Eisspeichers (2) eine Trennung zwischen fester und flüssiger Phase des Wärmespeicherfluids (11) durch Dichteunterschied zu erzeugen, weil die geringere Dichte des festen Wärmespeicherfluid (11) dasselbe im Eisspeicher nach oben aufsteigen lässt und dort gespeichert wird während das Wärmespeicherfluid (11) in flüssiger Form am Boden des Eisspeichers (2) über die Pumpe (17) wieder dem Kreisprozess zugeführt wird.

8. Verfahren nach Anspruch 1, abweichend davon **dadurch gekennzeichnet, dass** das Wärmeträgerfluid (5) in den unteren horizontalen Teil des Mischbehälters (20) über die Pumpe (8) eingebracht wird und von dort oberhalb der Grenzschicht (12) geführt wird, im Gleichstrom mit dem unter der Grenzschicht (12) geführten Wärmespeicherfluid (11), und dann im Gegenstrom zum Wärmespeicherfluid (11) zum oberen Teil des Mischbehälters (7) strömt und diesen durch die Rohrleitung (6) verlässt, wobei die Strömungsgeschwindigkeit des Wärmeträgerfluids (5) durch den Mischbehälter (3) so gering ist, dass das gesamte Wärmespeicherfluid (11) nach unten durch den Mischbehälter (3) gelangt und nach Sammlung auf der Schräge (10) durch die Grenzschicht (12) hindurchtritt und den Mischbehälter (3) über die Rohrleitung (4) verlässt.

9. Verfahren nach vorgenannten Ansprüchen 1 und 8, **dadurch gekennzeichnet, dass** durch eine oder mehrere Umlenkungen der Strömungsverlauf des Wärmeträgerfluid (5) und des Wärmespeicherfluids (11) so gestaltet wird, dass eine oder mehrere Rezirkulationszonen (22) oberhalb der Grenzschicht (12) entstehen, in denen beide Fluide zirkulieren können, so dass die Verweildauer des Wärmespeicherfluid (11) im Wärmeträgerfluid (5) erhöht und damit der Wärmeübergang vom Wärmespeicherfluid (11) auf das Wärmeträgerfluid (5) verbessert wird.

10. Vorrichtung zum Vermischen und Entmischen zweier Flüssigkeiten unterschiedlicher Dichte, bevorzugt zur Durchführung des Verfahrens nach Anspruch 1, umfassend
a) einen oberen Teil des Mischbehälters (7), in dem sich Wärmeträgerfluid (5) befindet und ständig eingebracht wird, und in dem sich eine Tropfvorrichtung (13) zum Eintropfen von einem Wärmespeicherfluid (11), mit oder ohne Glocke (27), durch einen Gasraum (14) , der oberhalb eines Wärmeträgerfluids (5) ausgebildet wird, so dass die Tropfvorrichtung (13) nicht mit dem Wärmeträgerfluid (5) in Berührung kommt,
b) ein sich daran anschließendes senkrechtes oder nahezu senkrechtes Rohrstück (15), welches dann mit einem Knick (9) in ein 92-178 Grad von der Senkrechten abgewinkeltes Rohrstück übergeht, so dass eine Schräge (10) ausgebildet wird, anstelle des Knicks (9) kann die Richtungsänderung des Rohres (15) auch durch ein oder mehrere Bogenstücke erfolgen,
c) ein horizontal oder nahezu horizontales Rohr mit daran anschließenden Behälter, welches sich seitlich an das Rohr mit Schräge (10) anschließt und welches den unteren horizontalen Teil des Mischbehälters (20) bildet, der durch eine Pumpe (8) mit Wärmeträgerfluid (5) befüllt oder von Wärmeträgerfluid (5) entleert wird und durch eine Rohrleitung (16) mit Wärmespeicherfluid (11) befüllt wird,
die Vorrichtung ist **dadurch gekennzeichnet, dass** der untere horizontalen Teils des Mischbehälters (20) im Bereich der Pumpe (8) und der Rohrleitung (16) so durch Querschnittsvergrößerung ausgebildet ist, dass sowohl das Wärmeträgerfluid (5) langsam oberhalb der Grenzschicht (12) als auch das Wärmespeicherfluid (11) langsam unterhalb der Grenzschicht (12) strömen kann,
d) eine Rohrleitung (4), durch die das Wärmespeicherfluid (11) in fester und flüssiger Form den Mischbehälter (3) verlässt, diese Rohrleitung (4) weist im Anschluss an den Mischbehälter (3) einen relativ kurzen senkrechten oder schrägen Verlauf (0 bis ca. 20 Grad) zur Senkrechten auf, während der sich daran anschließende Verlauf der Rohrleitung (4) horizontal oder nur leicht in Strömungsrichtung geneigt (0-20 Grad) gestaltet.

## Claims

1. Method for operating a mixing container (3) with a connected ice reservoir of a latent heat storage unit (1),
a heat storage fluid (11) changing between a liquid phase and a solid phase and in the liquid phase being mixed with a heat transfer fluid (5), melting heat being transferred between the heat storage fluid (11) and the heat transfer fluid (5), the liquid heat storage fluid (11) being insoluble in the heat transfer fluid (5) and the liquid heat storage fluid (11) having a higher density than the heat transfer fluid (5), **characterized in that**
a) via a gas space (14) the heat storage fluid (11) in an upper part of the mixing container (7) is introduced into the heat transfer fluid (5),
b) due to a flow of the heat storage fluid (11) within a flow of the heat transfer fluid (5), heat is transferred from the heat storage fluid (11) to the heat transfer fluid (5),
c) via a flow deflection, the heat storage fluid (11) is concentrated in liquid as well as in solid form,
d) the concentrated heat storage fluid (11) flows through a boundary layer (12) that is situated between the heat transfer fluid (5) and the heat storage fluid (11),
e) the heat storage fluid (11) is withdrawn in the form of a second flow of the heat storage fluid (23) below the boundary layer (12) in the direction of an ice reservoir (2),
f) in the ice reservoir (2), via a slow horizontal inflow of the heat storage fluid (11) into the lower part of the ice reservoir (2), the solid and liquid phases of the heat storage fluid (11) are separated due to the difference in density.

2. Method according to Claim 1, **characterized in that** the heat storage fluid (11) in the upper part of a mixing container (7) is introduced in the form of droplets by means of a dripping device (13) into the heat transfer fluid (5) that flows around a bell (27) via the gas space (14) inside the bell (27), where the size of the gas space (14) within the bell (27) is adjustable.

3. Method according to Claim 1, **characterized in that** the heat storage fluid (11) in the upper part of a mixing container (7) is introduced in the form of droplets by means of a dripping device (13) into the heat transfer fluid (5) via the gas space (14), where the heat transfer fluid (5) first flows through a pipeline (6) into a container (31) that tightly encloses the upper part of the mixing container (7) and then subsequently flows through the liquid-permeable container wall (33) into the upper part of the mixing container (7), where the gas space (14) has a filling and emptying line (32) by means of which the size of the gas space (14) within the upper part of the mixing container (7) can be adjusted.

4. Method according to Claim 1, **characterized in that,** in a perpendicular or essentially perpendicular flow through the upper part of the mixing container (7) and downwards through a pipe (15), the heat storage fluid (11) mixes with the heat transfer fluid (5), which likewise flows downwards, so as to transfer heat from the heat storage fluid (11) to the heat transfer fluid (5), as a result of which the heat storage fluid (11) makes a partial transition into the solid aggregate state.

5. Method according to Claim 1, **characterized in that** in the lower part of the mixing container (3), via a flow deflection in the bend (9), the heat storage fluid (11) is concentrated in liquid and solid forms flowing over an incline (10) that extends at an angle (29) of 92° to 178° with respect to the perpendicular, flowing downwards due to the fact that the density of the heat storage fluid (11) is higher than that of the heat transfer fluid (5) and that it flows through this incline (10) of the mixing container (3), concentrating on the bottom of the incline (10); in this process, the abrupt flow deflection in the bend (9) can also take place in a more favorable manner in terms of flow via one or more sequential partial elbows, so that, at the end of the flow deflection, heat transfer fluid (5) and heat storage fluid (11) flow at an angle of 92° to 178° with respect to the perpendicular.

6. Method according to Claims 1 and 4, **characterized in that** the heat storage fluid (11), which is partly liquid and partly solid, is introduced through the boundary layer (12) into a flow of the heat storage fluid (23) generated below the boundary layer (12) when the boundary layer (12) is reached so that the heat storage fluid (11) that penetrates the boundary layer (12) is withdrawn in the area of the outlet (25) by means of the flow of the heat storage fluid (23) from the mixing container (3) in the direction of the ice reservoir (2), whereas entrained portions of the heat transfer fluid (5) again rise upwards to the boundary layer (12) due to their lower density with respect to the heat storage fluid (11) and leave the lower horizontal part of the mixing contsiner (20) with a horizontal flow of the heat transfer fluid (24), where the flow of the heat transfer fluid (23) is preferably generated by constantly conveying heat storage fluid (11) into the lower horizontal part of the mixing container (20) via a pipeline (16); moreover, the separation of heat storage fluid (11) and heat transfer fluid (5) is supported by the fact that the heat transfer fluid (5), coming from above, flows away sideways to the right due to its lower density since it cannot flow through the boundary layer (12) and consequently flows away sideways from the separation area in the area of the outlet (25).

7. Method according to Claim 1, **characterized in that** in the ice reservoir (2), the solid and liquid phases of the heat storage fluid (11) are separated by a slow horizontal or essentially horizontal inflow of the heat storage fluid (11) at a low height above the bottom of the ice reservoir (2) as a result of density difference, because the lower density of the solid heat storage fluid (11) allows the same to rise upwards in the ice reservoir and to store it there, whereas the heat storage fluid (11) in liquid form is once again fed via the pump (17) into the circulation process at the bottom of the ice reservoir (2).

8. Method according to Claim 1, alternatively **characterized in that** the heat transfer fluid (5) is introduced into the lower horizontal part of the mixing container (20) via the pump (8) and from there conveyed above the boundary layer (12), in a parallel current with the heat storage fluid (11) that is conveyed below the boundary layer (12), and then flows to the upper part of the mixing container (7) in a counter-current relative to the heat storage fluid (11) and leaves the mixing container (7) through the pipeline (6), the flow rate of the heat transfer fluid (5) through the mixing container (3) being so low that the entire amount of heat storage fluid (11) moves downward through the mixing container (3) and, after accumulating on the incline (10), passes through the boundary layer (12) and exits from the mixing container (3) via the pipeline (4).

9. Method according to the abovementioned Claims 1 and 8, **characterized in that,** by means of one or more deflections the flow path of the heat transfer fluid (5) and of the heat storage fluid (11) is configured such that, above the boundary layer (12), one or more recirculation zones (22) are formed in which both fluids can circulate so that the retention time of the heat storage fluid (11) in the heat transfer fluid (5) is increased, thereby improving the heat transfer from the heat storage fluid (11) to the heat transfer fluid (5).

10. Device for mixing and de-mixing two liquids of different densities, preferably for performing the method according to Claim 1, comprising
a) an upper part of the mixing container (7) which contains heat transfer fluid (5) and is continuously fed with the same, and which contains a dripping device (13) for dripping in a heat storage fluid (11), with or without a bell (27), via a gas space (14) formed above a heat transfer fluid (5) so that the dripping device (13) does not come in contact with the heat transfer fluid (5);
b) an adjoining perpendicular or essentially perpendicular pipe section (15) that then, with a bend (9), makes a transition to a pipe section that is at an angle of 92° to 178° with respect to the perpendicular, so as to form an incline (10); instead of the bend (9), the change in direction of the pipe (15) can also be effected by one or more elbows;
c) a horizontal or almost horizontal pipe with an adjoining container that laterally adjoins the pipe with an incline (10) and that forms the lower horizontal part of the mixing container (20) that is filled with heat transfer fluid (5) or emptied of heat transfer fluid (5) by means of a pump (8) and is filled with heat storage fluid (11) via a pipeline (16);
the device is **characterized in that** the lower horizontal part of the mixing container (20) in the area of the pump (8) and of the pipeline (16) is configured by cross-section enlargement such that the heat transfer fluid (5) can slowly flow above the boundary layer (12) and the heat storage fluid (11) can slowly flow below the boundary layer (12);
d) a pipeline (4) through which the heat storage fluid (11) leaves the mixing container (3) in solid or liquid form; adjoining the mixing container (3), this pipeline (4) takes a relatively short vertical or inclined course (0 to approx. 20°) to the perpendicular, whereas the adjacent course of the pipeline (4) is horizontal or only at a slight incline to the direction of flow (0-20°).

## Revendications

1. Procédé destiné à faire fonctionner un récipient de mélange (3) avec un accumulateur de glace (2) raccordé d'un accumulateur de chaleur latente (1), sachant qu'un fluide accumulateur de chaleur (11) alterne entre une phase liquide et une phase solide et est mélangé dans la phase liquide à un fluide caloporteur (5), sachant que la chaleur de fusion est transmise entre le fluide accumulateur de chaleur (11) et le fluide caloporteur (5), sachant que le fluide accumulateur de chaleur liquide (11) est insoluble dans le fluide caloporteur (5) et sachant que le fluide accumulateur de chaleur liquide (11) comporte une densité plus élevée que le fluide caloporteur (5), **caractérisé en ce que**
a) le fluide accumulateur de chaleur (11) dans une partie supérieure du récipient de mélange (7) est mis en oeuvre dans le fluide caloporteur (5) par un compartiment de gaz (14),
b) de la chaleur du fluide accumulateur de chaleur (11) est transmise au fluide caloporteur (5) par un écoulement du fluide accumulateur de chaleur (11) à l'intérieur d'un écoulement du fluide caloporteur (5),
c) le fluide accumulateur de chaleur (11) est concentré sous une forme liquide et solide par le biais d'une dérivation d'écoulement,
d) le fluide accumulateur de chaleur (11) concentré traverse une couche limite (12) entre le fluide caloporteur (5) et le fluide accumulateur de chaleur (11),
e) le fluide accumulateur de chaleur (11) est entraîné avec un deuxième écoulement du fluide accumulateur de chaleur (23) sous la couche limite (12) en direction d'un accumulateur de glace (2),
f) une séparation est produite entre la phase solide et liquide du fluide accumulateur de chaleur (11) par différence de densité dans l'accumulateur de glace (2) par le biais d'une pénétration horizontale lente du fluide accumulateur de chaleur (11) dans la partie inférieure de l'accumulateur de glace (2).

2. Procédé selon la revendication 1, **caractérisé en ce que** le fluide accumulateur de chaleur (11) dans la partie supérieure d'un récipient de mélange (7) est introduit sous forme de gouttes par le compartiment de gaz (14) à l'intérieur d'une cloche (27) par un dispositif de goutte-à-goutte (13) dans le fluide caloporteur (5) s'écoulant autour de la cloche (27), sachant que le compartiment de gaz (14) peut être réglé dans sa taille à l'intérieur de la cloche (27).

3. Procédé selon la revendication 1, **caractérisé en ce que** le fluide accumulateur de chaleur (11) dans la partie supérieure d'un récipient de mélange (7) est introduit sous forme de gouttes par le compartiment de gaz (14) par un dispositif de goutte-à-goutte (13) dans le fluide caloporteur (5), lequel s'écoule par une conduite (6) d'abord dans un conteneur (31), qui entoure hermétiquement la partie supérieure du récipient de mélange (7) pour s'écouler ensuite par la paroi de conteneur (33) perméable aux liquides dans la partie supérieure du récipient de mélange (7), sachant que le compartiment de gaz (14) dispose d'une conduite de remplissage et de vidage (32) par laquelle la taille du compartiment de gaz (14) peut être réglée dans sa taille à l'intérieur de la partie supérieure du récipient de mélange (7).

4. Procédé selon la revendication 1, **caractérisé en ce que** le fluide accumulateur de chaleur (11) se mélange dans un écoulement vertical ou presque vertical par la partie supérieure du récipient de mélange (7) et un tuyau (15) vers le bas avec le fluide caloporteur (5) s'écoulant également vers le bas avec celui-ci pour transmettre de ce fait de la chaleur du fluide accumulateur de chaleur (11) au fluide caloporteur (5), ce par quoi le fluide accumulateur de chaleur (11) passe en partie à l'état d'agrégation solide.

5. Procédé selon la revendication 1, **caractérisé en ce que** dans la partie inférieure du récipient de mélange (3) par le biais d'une dérivation d'écoulement dans une courbure (9), le fluide accumulateur de chaleur (11) sous la forme liquide et solide peut se concentre en s'écoulant vers le bas sur une inclinaison (10), qui passe dans un angle (29) de 92-178 degrés par rapport à la verticale, en raison de sa densité plus élevée par rapport au fluide caloporteur (5) et en raison de la traversée de cette inclinaison (10) du récipient de mélange (3) au fond de l'inclinaison (10), la dérivation d'écoulement abrupte dans la courbure (9) peut à cet effet avoir lieu également de façon plus favorable en écoulement par une ou plusieurs dérivations plus douces ayant lieu l'une après l'autre de telle sorte qu'à la fin de la dérivation d'écoulement, le fluide caloporteur (5) et le fluide accumulateur de chaleur (11) s'écoulent avec un angle de 92-178 degrés par rapport à la verticale.

6. Procédé selon la revendication 1 et la revendication 4, **caractérisé en ce que** le fluide accumulateur de chaleur (11) en partie liquide et en partie solide pénètre à travers la couche limite (12) dans un écoulement du fluide accumulateur de chaleur (23) produit sous la couche limite lorsque la couche limite (12) est atteinte de telle sorte que le fluide accumulateur de chaleur (11) traversant la couche limite (12) est entraîné dans la zone de la sortie (25) au moyen de l'écoulement du fluide accumulateur de chaleur (23) du récipient de mélange (3) en direction de l'accumulateur de glace (2) alors que les parties entraînées du fluide caloporteur (5) remontent à nouveau vers le haut vers la couche limite (12) en raison de la densité plus faible par rapport au fluide accumulateur de chaleur (11) et quittent la partie inférieure horizontale du récipient de mélange (20) avec un écoulement horizontal du fluide caloporteur (24), sachant de préférence que l'écoulement du fluide caloporteur (23) est produit par le fait que du fluide accumulateur de chaleur (11) est transporté en continu par une conduite (16) dans la partie inférieure horizontale du récipient de mélange (20), à cela s'ajoute le fait que la séparation du fluide caloporteur (5) et du fluide accumulateur de chaleur (11) est soutenue par le fait que le fluide caloporteur (5), venant du haut, s'échappe latéralement à droite, un peu au-dessus de la couche limite (12) en raison de sa densité plus faible, parce qu'il ne peut pas s'écouler à travers la couche limite (12) et s'échappe ainsi latéralement de la zone de séparation dans la zone de sortie (25).

7. Procédé selon la revendication 1, **caractérisé par le fait** de produire une séparation entre une phase solide et liquide du fluide accumulateur de chaleur (11) par différence de densité dans l'accumulateur de glace (2) par une pénétration horizontale lente ou presque horizontale du fluide accumulateur de chaleur (11) en phase solide et liquide à faible hauteur sur le fond de l'accumulateur de glace (2), parce que la densité plus faible du fluide accumulateur de chaleur (11) solide permet à celui-ci de monter vers le haut dans l'accumulateur de glace et d'y être stocké alors que le fluide accumulateur de chaleur (11) sous la forme liquide sur le fond de l'accumulateur de glace (2) est acheminé par la pompe (17) à nouveau vers le processus en circuit.

8. Procédé selon la revendication 1, différente du fait **caractérisé en ce que** le fluide caloporteur (5) est introduit dans la partie horizontale inférieure du récipient de mélange (20) par la pompe (8) et est dirigé depuis cet endroit au-dessus de la couche limite (12) en flux continu avec le fluide accumulateur de chaleur (11) guidé sous la couche limite (12) et s'écoule ensuite à contrecourant du fluide accumulateur de chaleur (11) vers la partie supérieure du récipient de mélange (7) et quitte celui-ci par la conduite (6), sachant que la vitesse d'écoulement du fluide caloporteur (5) à travers le récipient de mélange (3) est si faible que tout le fluide accumulateur de chaleur (11) parvient vers le bas par le récipient de mélange (3) et traverse la couche limite (12) après collecte sur l'inclinaison (10) et quitte le récipient de mélange (3) par la conduite (4).

9. Procédé selon les revendications précédentes 1 et 8, **caractérisé en ce que** le profil d'écoulement du fluide caloporteur (5) et du fluide accumulateur de chaleur (11) est configurée par une ou plusieurs dérivations de telle manière qu'une ou plusieurs zones de recirculation (22) sont créées au-dessus de la couche limite (12), dans lesquelles peuvent circuler les deux fluides de telle manière que la durée de séjour du fluide accumulateur de chaleur (11) est augmentée dans le fluide caloporteur (5) et le transfert thermique du fluide accumulateur de chaleur (11) au fluide caloporteur (5) est de ce fait amélioré.

10. Dispositif pour mélanger et dissocier deux liquides de densité différente, préféré pour exécuter le procédé selon la revendication 1, comprenant
a) une partie supérieure du récipient de mélange (7), dans laquelle se trouve et est introduit en continu un fluide caloporteur (5) et dans lequel se trouve un dispositif de goute-à-goutte (13) pour l'introduction goutte-à-goutte d'un fluide accumulateur de chaleur (11), avec ou sans cloche (27), par un compartiment de gaz (14), qui est constitué au-dessus d'un fluide caloporteur (5), de telle manière que le dispositif de goutte-à-goutte (13) n'entre pas en contact avec le fluide caloporteur (5),
b) une pièce tubulaire (15) verticale ou presque verticale s'y raccordant, laquelle passe ensuite avec une courbure (9) dans une pièce tubulaire coudée avec une courbure (9) à 92-178 degrés par rapport à la verticale de telle manière qu'une inclinaison (10) est constituée à la place de la courbure (9), la modification de direction du tuyau (15) peut également avoir lieu par une ou plusieurs pièces courbées,
c) un tuyau horizontal ou presque horizontal avec un conteneur s'y raccordant, lequel se raccorde latéralement au tuyau avec l'inclinaison (10) et lequel forme la partie horizontale inférieure du récipient de mélange (20), qui est remplie par une pompe (8) de fluide caloporteur (5) ou est vidée du fluide caloporteur (5) et est remplie par une conduite (16) de fluide accumulateur de chaleur (11),
le dispositif **étant caractérisé en ce que** la partie horizontale inférieure du récipient de mélange (20) est constituée dans la zone de la pompe (8) et de la conduite (16) par agrandissement de la section, de sorte que peuvent ainsi s'écouler tant le fluide caloporteur (5) lentement au-dessus de la couche limite (12) que le fluide accumulateur de chaleur (11) lentement en dessous de la couche limite (12),
d) une conduite (4), à travers laquelle le fluide accumulateur de chaleur (11) quitte le récipient de mélange (3) sous la forme solide et liquide, cette conduite (4) comporte à la suite du récipient de mélange (3) un profil verticale ou oblique relativement court (0 à env. 20 degrés) par rapport à la verticale tandis que le profil s'y raccordant de la conduite (4) est configuré horizontalement ou seulement légèrement incliné (0 - 20 degrés) en direction de l'écoulement.
